# EUROPÄISCHE PATENTSCHRIFT

(11) **EP 0 470 407 B1**
(45) Veröffentlichungstag und Bekanntmachung des Hinweises auf die Patenterteilung: **03.05.1995**
(21) Anmeldenummer: 91111907.1
(22) Anmeldetag: 17.07.1991
(51) Int. Cl.: B60Q 1/115

(54) **Einrichtung zur Regelung der Leuchtweite eines Kraftfahrzeugs**
Device for controlling the lightbeam of a vehicle
Dispositif de réglage de la portée de l'éclairage d'un véhicule

(30) Priorität: 06.08.1990 DE 4024912
(43) Veröffentlichungstag der Anmeldung: 12.02.1992
(73) Patentinhaber: Hella KG Hueck & Co., 59552 Lippstadt (DE)
(72) Erfinder: Hussmann, Micha, W-4780 Lippstadt (DE); Hufnagel, Joachim, W-5750 Menden 1 (DE)

(56) Entgegenhaltungen:
- EP-A- 0 355 539
- DE-A- 3 807 731

## Beschreibung

Die Erfindung betrifft eine Einrichtung zur Regelung der Leuchtweite eines Kraftfahrzeugs mit einem Vorderachsgeber an der vorderen Radachse, mit einem Hinterachsgeber an der hinteren Radachse, deren Ausgangssignale von der relativen Stellung der Fahrzeugkarosserie zu den Radachsen abhängen, mit einem Sollwertbildner, der die Differenz der Signale von dem Vorderachsgeber zu denen von dem Hinterachsgeber bildet, mit einem ersten Filter, der einen Mittelwertbildner aufweist, der in Abhängigkeit von einer ersten Filterzeitkonstante aus den ungefilterten Sollwertsignalen des Sollwertbildners gefilterte Sollwertsignale bildet und mit einem Regler, der Stellelemente zum Einstellen von Scheinwerfern in ihrer Lage regelt.

Eine Einrichtung zur Regelung der Leuchtweite eines Kraftfahrzeugs dieser Art ist aus der deutschen Offenlegungsschrift DE-OS 31 10 094 A1 bekannt.

Fühler, die die relative Stellung der Fahrzeugkarosserie zu den Fahrzeugachsen oder Fahrzeugrädern messen, sind an einem Analog-Multiplexer angeschlossen, der die von den Fühlern anliegenden Signale über einen Analog/Digital-Wandler einem Microprozessor zuführt. Eine Filterung der anliegenden Signale erfolgt, indem in einem festgelegten Zeitabstand eine Mittelwertbildung der Signale durchgeführt wird. Dazu wird die Anzahl der einzubeziehenden Mittelwerte vorgegeben. Aus den Mittelwerten wird dann für je ein Fühlerpaar entsprechend einem Vorderachsgeber und einem Hinterachsgeber ein Differenzsignal gebildet, das einem Scheinwerfereinstellwert entspricht. Jedes dieser Differenzsignale wird einem Digital/Analog-Wandler zugeführt, der über je einen nachgeschalteten Operationsverstärker mit einer Scheinwerferstelleinrichtung verbunden ist. In Abhängigkeit von dem Vorzeichen der Differenzsignale werden somit Stellelemente vor oder zurückbewegt und Scheinwerferlageregister im Microprozessor hoch- oder heruntergezählt.

Als nachteilig erweist sich bei dieser vorbekannten Einrichtung zur Regelung der Leuchtweite eines Kraftfahrzeugs, daß die Mittelwertbildung nur in einem festgelegten Zeitabstand erfolgt, wodurch eine Anpassung an wechselnde Betriebsbedingungen des Kraftfahrzeugs nicht erfolgen kann. Insbesondere bei Bremsungen des Kraftfahrzeugs, die kurzzeitig zu starken Neigungsänderungen der Fahrzeugkarosserie führen, wird die Einstellung der Leuchtweite nicht schnell genug verändert, um zum einen eine Blendung des Gegenverkehrs und zum anderen Sichtweiteverluste auszuschließen, die zu gefährlichen Situationen bei dem Betrieb des Kraftfahrzeugs führen. Dies gilt insbesondere dann, wenn wie bei der vorbekannten Einrichtung beispielhaft eine Filterzeitkonstante in der Größenordnung von einer Minute gewählt wird, so daß sowohl bei Bremsungen und insbesondere bei Gewaltbremsungen als auch nach Bremsungen die Einstellung der Scheinwerfer und damit der Leuchtweite des Fahrzeugs Fehleinstellungen aufweist, die zu gefährlichen Situationen führen.

Weiterhin erweist sich bei der vorbekannten Einrichtung als nachteilig, daß vier Sensoren an den Radachsen vorgesehen sind, die ihre Signale über einen Analog-Multiplexer einem Microprozessor zuführen, weil sich somit eine kostenaufwendige Einrichtung ergibt, die zudem in aufwendiger Weise kostenintensiv herstellbar und montierbar ist.

Aus der europäischen Patentanmeldung EP-A-0 355 539 ist eine Einrichtung zur Regelung der Leuchtweite eines Fahrzeugs bekannt, die die Merkmale des Oberbegriffs des Anspruchs 1 aufweist. Diese bekannte Einrichtung weist zudem einen in Abhängigkeit von einem gemessenen Beschleunigungssignal in seiner Filterzeit umsteuerbaren Filter auf. Hierdurch wird die der Regelung der Leuchtweite zugrundeliegende Filterzeitkonstante derart an die gemessenen Beschleunigungswerte angepaßt, daß diese mit zunehmender positiver bzw. negativer Beschleunigung des Fahrzeugs kontinuierlich oder diskontinuierlich auf kürzere Zeiten verkleinert wird. Bei der bekannten Einrichtung erweist sich als nachteilig, daß ein Beschleunigungssignal des Fahrzeugs gemessen werden muß und ein Filter geschaffen werden muß, dessen Filterzeitkonstanten kontinuierlich oder diskontinuierlich aufgrund des Beschleunigungssignals umsteuerbar sind. Hierdurch sind kostenintensive und aufwendige Einrichtungen sowohl für die Bereitstellung des Beschleunigungssignals als auch zur Erzeugung der Filterwerte erforderlich.

Zudem erweist es sich als besonders nachteilig, daß bei einem Bremsvorgang, bevor ein aufgrund einer verkürzten Filterzeitkonstante gebildeter Regelwert wirksam wird, der Filter auf diese Filterzeitkonstante umgeschaltet werden muß und eine Mittelwertbildung gemäß dieser Filterzeitkonstanten durchgeführt werden muß, so daß keine direkte Umschaltung erfolgen kann.

Der Erfindung liegt die Aufgabe zugrunde, eine Einrichtung zu schaffen, die auf einfache und kostengünstige Weise, ohne daß ein Wegsignal vorliegt und ausgewertet wird, bei Bremsvorgängen des Kraftfahrzeugs die Dynamik der Regelung der Leuchtweite verbessert.

Die Aufgabe wird bei der erfindungsgemäßen Einrichtung zur Regelung der Leuchtweite durch die Merkmale des Anspruchs 1 gelöst. Fehleinstellungen der Leuchtweite zuverlässig vermieden werden. Dadurch, daß der Regler über eine Umschalteinrichtung wahlweise mit dem ersten Filter und mit dem zweiten Filter verbindbar ist, ergibt sich der Vorteil einer besonders sicheren und zuverlässigen einfachen und kostengünstigen Umschaltmöglichkeit der Regelung der Leuchtweite von einem ersten gefilterten Sollwertsignal auf ein zweites gefiltertes Sollwertsignal.

In diesem Zusammenhang ist es besonders vorteilhaft, daß die Umschalteinrichtung durch Signale von einem Bremspedalschalter umsteuerbar ist, weil somit auf besonders einfache und kostengünstige Weise, ohne daß ein Wegsignal vorliegt und ausgewertet wird, bei einem Bremsvorgang des Kraftfahrzeugs von einem ersten gefilterten Sollwertsignal, das aufgrund einer längeren Filterzeitkonstante gebildet wird, auf ein zweites gefiltertes Sollwertsignal umgeschaltet wird, das aufgrund einer zweiten kürzeren Filterzeitkonstante gebildet wird, wodurch auf besonders zuverlässige und sichere Weise erreicht wird, daß die Regelung der Leuchtweite bei Bremsvorgängen in Abhängigkeit eines zweiten gefilterten Sollwertsignals erfolgt, das die kurzzeitigen Neigungsänderungen der Fahrzeugkarosserie bei Bremsvorgängen schneller berücksichtigt und ausregelt als bei der Regelung aufgrund des ersten gefilterten Sollwertsignals, wodurch Fehleinstellungen der Leuchtweite insbesondere bei Gewaltbremsungen und bei und nach der Beendigung der Bremsvorgänge einfach, kostengünstig und sicher vermieden werden.

Es ist von Vorteil, daß die Signale des Bremspedalschalters die Umschalteinrichtung direkt umsteuern, weil auf diese Art und Weise einfach und kostengünstig während jedes Bremsvorgangs die Regelung der Leuchtweite aufgrund eines zweiten gefilterten Sollwertsignals erfolgt, das aufgrund einer zweiten kurzen Filterzeitkonstante gebildet wird, so daß alle Neigungsänderungen der Fahrzeugkarosserie während eines Bremsvorgangs bestmöglich bei der Regelung und Einstellung der Scheinwerfer berücksichtigt werden. Nach erfolgter Bremsung, das heißt dann, wenn kein Signal von dem Bremspedalschalter vorliegt, wird der Regler wieder über die Umschalteinrichtung mit dem ersten Filter verbunden, so daß die Regelung der Leuchtweite aufgrund des ersten gefilterten Sollwertsignals erfolgt, das durch eine Mittelwertbildung mittels der ersten längeren Filterzeitkonstante gebildet wird, wodurch die Lebensdauer der Stellelemente durch die geringere Anzahl der Regelvorgänge erhöht wird.

Dadurch, daß der Bremspedalschalter mit einer monostabilen Kippstufe verbunden ist, deren Ausgangssignale die Umschalteinrichtung umsteuern, ergibt sich der Vorteil, daß die Umsteuerung bei dem Einleiten eines Bremsvorgangs nur für eine feste durch die monostabile Kippstufe bestimmte Zeitdauer erfolgt, wodurch bei Bremsvorgängen die Regelung der Leuchtweite für diese vorgegebene Zeitdauer in Abhängigkeit von dem zweiten gefilterten Sollwertsignal erfolgt, das aufgrund der zweiten kürzeren Filterzeitkonstante gebildet wird, wobei durch geeignete Wahl der festgelegten Zeitdauer für die Umsteuerung der Umschalteinrichtung durch die monostabile Kippstufe sichergestellt wird, daß die Neigungsänderungen der Fahrzeugkarosserie, die durch Bremsvorgänge bedingt sind, bei der Regelung der Leuchtweite derart ausgeregelt werden, daß eine Gefährdung bei dem Betrieb des Kraftfahrzeugs durch eine Blendung des Gegenverkehrs oder durch Sichtweiteverluste auszuschließen ist.

Dadurch, daß der Sollwertbildner und/oder die Filter und/oder die Umschalteinrichtung und/oder der Regler und/oder die monostabile Kippstufe Teile eines Microcomputers sind, ergibt sich der Vorteil einer besonders einfach und kostengünstig herstellbaren und montierbaren Einrichtung zur Regelung der Leuchtweite eines Kraftfahrzeugs.

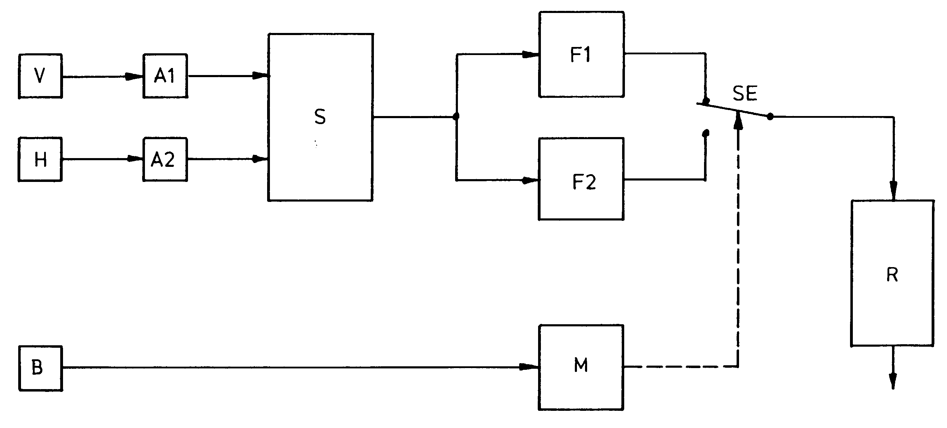

Ein Ausführungsbeispiel des Erfindungsgegenstands ist in der einzigen Zeichnung in Form eines Blockschaltbilds dargestellt und wird im folgenden anhand dieser Zeichnung näher beschrieben.

Ein Vorderachsgeber (V), der analoge Signale erzeugt, die von der relativen Stellung der Fahrzeugkarosserie zu der Vorderachse abhängen, ist elektrisch leitend über einen ersten Analog/Digital-Wandler (A1), der die von dem Vorderachsgeber (V) anliegenden analogen Signale in digitale Signale umwandelt, an einen Sollwertbildner (S) angeschlossen. Ein Hinterachsgeber (H), der analoge Signale erzeugt, die von der relativen Stellung der Fahrzeugkarosserie zu der Hinterachse abhängen, ist elektrisch leitend über einen zweiten Analog/Digital-Wandler (A2), der die analogen Signale von dem Hinterachsgeber (H) in digitale Signale umwandelt, mit dem Sollwertbildner (S) verbunden.

Der Sollwertbildner (S) bildet die Differenz der Signale von dem Vorderachsgeber (V) zu denen von dem Hinterachsgeber (H) und erzeugt somit Sollwertsignale. Je nach den Anforderungen multipliziert der Sollwertbildner (S) diese Sollwertsignale für die Weiterverarbeitung mit einem Korrekturfaktor.

Der Sollwertbildner (S) ist elektrisch leitend mit einem ersten Filter (F1) verbunden, der eine erste Filterzeitkonstante aufweist, über die eine erste Mittelwertbildung der Sollwertsignale von dem Sollwertbildner (S) durchgeführt wird und der auf diese Weise ein erstes gefiltertes Sollwertsignal erzeugt.

Der Sollwertbildner (S) ist zudem elektrisch leitend mit einem zweiten Filter (F2) verbunden, der eine zweite Filterzeitkonstante aufweist, die kürzer ist als die erste Filterzeitkonstante des ersten Filters (F1) und somit über die Dauer der zweiten Filterzeitkonstante eine Mittelwertbildung der Sollwertsignale von dem Sollwertbildner (S) durchführt. Die so gebildeten zweiten gefilterten Sollwertsignale von dem zweiten Filter (F2) stehen aufgrund der kürzeren zweiten Filterzeitkonstante in einer stärkeren Abhängigkeit von kurzzeitigen Neigungsänderungen der Fahrzeugkarosserie und ermöglichen es somit, eine Regelung der Leuchtweite durchzuführen, bei der kurzzeitige Neigungsänderungen der Fahrzeugkarosserie besser berücksichtigt werden, als wenn eine längere Filterzeitkonstante zur Filterung der Sollwertsignale verwendet wird. Die Filterzeitkonstante des ersten Filters (F1) kann dabei beispielhaft etwa 1 Sekunde betragen, während die zweite Filterzeitkonstante des zweiten Filters (F2) beispielhaft etwa 0,5 Sekunden betragen kann. Je nach dem Anwendungsfall und den Erfordernissen können diese Filterzeitkonstanten auch größer oder kleiner gewählt werden.

Eine Umschalteinrichtung (SE) verbindet den Regler (R) elektrisch leitend wahlweise mit dem ersten Filter (F1) oder dem zweiten Filter (F2). Die Umsteuerung der Umschalteinrichtung (SE) erfolgt dabei durch Signale, die von einem Bremspedalschalter (B) erzeugt werden. Der Bremspedalschalter (B) kann bei einem besonderen Ausführungsbeispiel mit einer monostabilen Kippstufe (M) in Verbindung stehen, die die Umschalteinrichtung (SE) nur für eine durch die monostabile Kippstufe (M) festgelegte Zeit umsteuert, das heißt, für diese festgelegte Zeit den Regler (R) mit dem zweiten Filter (F2) in Verbindung setzt. Der Regler (R) regelt aufgrund der ihm zugeführten gefilterten Sollwertsignale die Stellung von hier nicht gezeigten Stellelementen, die die Lage von Scheinwerfern zur Leuchtweiteregelung verstellen.

Die Wirkungsweise der erfindungsgemäßen Einrichtung wird anhand des zuvor beschriebenen Ausführungsbeispiels und der Zeichnung im folgenden näher beschrieben.

Während des Stillstands und des Fahrbetriebs des Kraftfahrzeugs bilden der Vorderachsgeber (V) und der Hinterachsgeber (H) analoge Signale, die von der relativen Stellung der Fahrzeugkarosserie zu den Radachsen oder Rädern des Kraftfahrzeugs abhängen. Diese analogen Signale von dem Vorderachsgeber (V) und dem Hinterachsgeber (H) werden durch die Analog/Digital-Wandler (A1, A2) digitalisiert und dem Sollwertbildner (S) zugeführt. Dieser Sollwertbildner (S) bildet Sollwertsignale, indem er die Differenz zwischen den Signalen von dem Vorderachsgeber (V) und dem Hinterachsgeber (H) bildet. Je nach den Anforderungen werden diese Differenzsignale, die Sollwertsignale darstellen, mit einem Korrekturfaktor für eine vereinfachte Weiterverarbeitung der Sollwertsignale multipliziert.

Diese Sollwertsignale werden gleichzeitig einem ersten Filter (F1) und einem zweiten Filter (F2) zugeführt, wobei der erste Filter (F1) aufgrund seiner ersten Filterzeitkonstanten eine erste Mittelwertbildung durchführt und der zweite Filter (F2) aufgrund seiner zweiten Filterzeitkonstanten eine zweite Mittelwertbildung der Sollwertsignale durchführt. Der erste Filter (F1) und der zweite Filter (F2) bilden somit unabhängig voneinander gefilterte Sollwertsignale, die von den Filterzeitkonstanten abhängen. Die zweite Filterzeitkonstante des zweiten Filters (F2) weist dabei eine kürzere Dauer auf als die erste Filterzeitkonstante des ersten Filters (F1), so daß das durch den zweiten Filter (F2) gebildete zweite gefilterte Sollwertsignal eine größere Abhängigkeit von kurzzeitigen Änderungen der Neigung der Fahrzeugkarosserie aufweist. Bei einem normalen Betrieb des Kraftfahrzeugs, das heißt im Stillstand oder bei dem Fahrbetrieb, erfolgt die Regelung der Leuchtweite aufgrund des ersten gefilterten Sollwertsignals von dem ersten Filter (F1), der eine Filterzeitkonstante aufweist, die hier beispielhaft in einer Größenordnung von etwa 1 Sekunde liegt, die aber auch je nach Anwendungsfall größer oder kleiner sein kann, und die sicherstellt, daß bei dem Betrieb des Kraftfahrzeugs die Leuchtweite bestmöglich geregelt wird, das heißt, daß Blendungen des Gegenverkehrs oder Sichtweiteverluste, die zu gefährlichen Situationen führen können, vermieden werden. Die erste Filterzeitkonstante des ersten Filters (F1) wird dabei so gewählt, daß die Stellelemente, die von dem Regler (R) in ihrer Lage geregelt werden, zum einen den Regelschwankungen mühelos folgen können, und zum anderen sichergestellt ist, daß die Stellelemente eine hohe Lebensdauer haben.

Bei Bremsvorgängen, insbesondere bei Gefahrenbremsungen ist es möglich, daß die erste Filterzeitkonstante des ersten Filters zu lang ist, um die kurzzeitigen starken Neigungsänderungen der Fahrzeugkarosserie bei der Mittelwertbildung und der Bildung der gefilterten Sollwertsignale derart zu berücksichtigen, daß es nicht zu Sichtweiteverlusten kommt und somit gefährliche Situationen bei dem Betrieb des Kraftfahrzeugs erzeugt werden, so daß bei dem hier gezeigten Erfindungsgegenstand bei dem Vorliegen einer Bremsbetätigung die Regelung von dem ersten gefilterten Sollwertsignal auf eine Regelung durch das zweite gefilterte Sollwertsignal umgeschaltet wird.

Das zweite gefilterte Sollwertsignal wird dabei durch eine Mittelwertbildung gebildet, die eine kürzere zweite Filterzeitkonstante aufweist als die erste Mittelwertbildung durch den ersten Filter (F1). Somit können auch solche Neigungsänderungen der Fahrzeugkarosserie, die durch Bremsvorgänge, insbesondere Bremsungen bei Gefahr hervorgerufen werden, bei der Regelung der Leuchtweite besser ausgeregelt werden, so daß bei Bremsvorgängen bestmöglich Sichtweiteverluste vermieden werden.

Bei einem ersten Ausführungsbeispiel steuert das Signal von einem Bremspedalschalter (B) die Umschalteinrichtung (SE) direkt um, das heißt, wird das Bremspedal betätigt, so liegt an dem Bremspedalschalter (B) ein Signal an, das die Umschalteinrichtung (SE) derart ansteuert, daß die Verbindung zwischen dem ersten Filter (F1) und dem Regler (R) gelöst wird und der zweite Filter (F2) mit dem Regler (R) für eine schnellere Regelung in Verbindung gesetzt wird. Der zweite Filter (F2) bleibt dabei solange mit dem Regler (R) verbunden bis das Signal von dem Bremspedalschalter (B), das durch eine Betätigung der Bremse bedingt ist, nicht mehr anliegt. Dann wird die Verbindung zwischen dem zweiten Filter (F2) und dem Regler (R) wieder gelöst und der erste Filter (F1) wird mit dem Regler (R) in Verbindung gesetzt.

Bei einem anderen Ausführungsbeispiel ist der Bremspedalschalter (B) elektrisch leitend mit einer monostabilen Kippstufe (M) verbunden, so daß bei einer Bremsbetätigung und einem anliegenden Signal von dem Bremspedalschalter (B) die Umschalteinrichtung (SE) nur für eine solche Zeit umgesteuert wird, und der Regler (R) mit dem zweiten Filter (F2) verbunden wird, die durch die monostabile Kippstufe (M) festgelegt ist. Diese Zeit für die Umsteuerung wird dabei so festgelegt, daß bei Bremsvorgängen die Leuchtweite des Kraftfahrzeugs derart korrigiert wird, daß Sichtweiteverluste bei solchen Bremsvorgängen vermieden werden.

## Patentansprüche

1. Einrichtung zur Regelung der Leuchtweite eines Kraftfahrzeugs mit einem Vorderachsgeber an der vorderen Radachse, mit einem Hinterachsgeber an der hinteren Radachse, deren Ausgangssignale von der relativen Stellung der Fahrzeugkarosserie zu den Radachsen abhängen, mit einem Sollwertbildner, der die Differenz der Signale von dem Vorderachsgeber zu denen von dem Hinterachsgeber bildet, mit einem ersten Filter, der einen Mittelwertbildner aufweist, der in Abhängigkeit von einer ersten Filterzeitkonstante aus den ungefilterten Sollwertsignalen des Sollwertbildners gefilterte Sollwertsignale bildet, und mit einem Regler, der Stellelemente zum Einstellen von Scheinwerfern in ihrer Lage regelt, dadurch gekennzeichnet, daß der Sollwertbildner (S) zum einen mit dem ersten Filter (F1) und zum anderen mit einem zweiten Filter (F2) verbunden ist, daß der zweite Filter (F2) eine zweite Filterzeitkonstante aufweist, die kürzer ist als die erste Filterzeitkonstante des ersten Filters (F1), daß die Sollwertsignale des Sollwertbildners (S) dem ersten Filter (F1) und dem zweiten Filter (F2) gleichzeitig zur Bildung voneinander unabhängiger gefilterter Sollwertsignale zugeführt werden, daß der Regler (R) über eine Umschalteinrichtung (SE) wahlweise mit dem ersten Filter (F1) oder mit dem zweiten Filter (F2) verbindbar ist und daß die Umschalteinrichtung (SE) durch Signale von einem Bremspedalschalter (B) derart umsteuerbar ist, daß der Regler (R) mit dem zweiten Filter (F2) verbunden wird, wenn ein Bremsvorgang vorliegt.

2. Einrichtung nach Anspruch 1, dadurch gekennzeichnet, daß die Signale des Bremspedalschalters (B) die Umschalteinrichtung (SE) direkt umsteuern.

3. Einrichtung nach Anspruch 1, dadurch gekennzeichnet, daß der Bremspedalschalter (B) mit einer monostabilen Kippstufe (M) verbunden ist, deren Ausgangssignale die Umschalteinrichtung (SE) umsteuern.

## Claims

1. A device for controlling the beam range of a motor vehicle, having a front axle transmitter on the front axle and having a rear axle transmitter on the rear axle, the output signals of which depend on the position of the vehicle bodywork in relation to the wheel axles, the device having a set value former which forms the difference between the signals from the front axle transmitter and those from the rear axle transmitter, having a first filter which comprises an average former which forms filtered set value signals from the unfiltered set value signals of the set value former according to a first filter time constant, and having a controller which controls control elements for adjusting the position of headlamps, characterised in that the set value former (S) is firstly connected to a first filter (F1) and is secondly connected to a second filter (F2), that the second filter (F2) has a second filter time constant which is shorter than the first filter time constant of the first filter (F1), that the set value signals from the set value former (S) are fed simultaneously to the first filter (F1) and to the second filter (F2) for the formation of filtered set value signals which are independent of each other, that the controller (R) can be connected alternately to the first filter (F1) or to the second filter (F2) via a switch-over device (SE), and that the switch-over device (SE) can be switched over by signals from a brake pedal switch (B) in such a way that the controller (R) is connected to the second filter (F2) when a braking operation is taking place.

2. A device according to claim 1, characterised in that the signals from the brake pedal switch (B) reverse the switch-over device (SE) directly.

3. A device according to claim 1, characterised in that the brake pedal switch (B) is connected to a monostable multivibrator (M), the output signals from which reverse the switch-over device (SE).

## Revendications

1. Dispositif de réglage de la portée d'éclairement d'un véhicule automobile, comportant un capteur d'essieu avant sur l'essieu avant, un capteur d'essieu arrière sur l'essieu arrière, dont les signaux de sortie dépendent de la position relative de la carrosserie du véhicule par rapport aux essieux, comportant un formateur de la valeur de consigne qui forme la diiférence entre les signaux provenant du capteur d'essieu avant et ceux provenant du capteur d'essieu arrière, comportant un premier filtre qui comporte un formateur de la valeur moyenne qui forme, en fonction d'une première constante de temps de filtrage et à partir des signaux de valeur de consigne non filtrés du formateur de la valeur de consigne, des signaux de valeur de consigne filtrés, et comportant un régulateur qui ajuste les éléments de réglage pour régler des phares dans leur position, caractérisé en ce que le formateur (S) de valeur de consigne est relié d'une part au premier filtre (F1) et d'autre part à un second filtre (F2), en ce que le second filtre (F2) présente une seconde constante de temps de filtrage qui est plus courte que la première constante de temps de filtrage du premier filtre (F1), en ce que les signaux de valeur de consigne du formateur (S) de valeur de consigne sont amenés simultanément au premier filtre (F1) et au second filtre (F2) pour former des signaux de valeur de consigne filtrés indépendamment les uns des autres, en ce que le régulateur (R) peut être relié par l'intermédiaire d'un dispositif de commutation (SE) au choix au premier filtre ou au second filtre (F2), et en ce que le dispositif de commutation (SE) peut être inversé par des signaux provenant d'un commutateur (B) de pédale de frein, de telle sorte que le régulateur (R) est relié au second filtre lorsqu'un freinage a lieu.

2. Dispositif selon la revendication 1, caractérisé en ce que les signaux du commutateur (B) de pédale de frein inversent directement le dispositif de commutation (SE).

3. Dispositif selon la revendication 1, caractérisé en ce que le commutateur (B) de pédale de frein est relié à une bascule (M) monostable dont les signaux de sortie inversent le dispositif de commutation (SE).
